Europäisches Patentamt

European Patent Office

Office européen des brevets

(19)

(11) EP 0 957 397 A1

(12) DEMANDE DE BREVET EUROPEEN

(43) Date de publication:
17.11.1999 Bulletin 1999/46

(51) Int Cl.⁶: G03B 42/04

(21) Numéro de dépôt: 99401126.0

(22) Date de dépôt: 07.05.1999

(84) Etats contractants désignés:
AT BE CH CY DE DK ES FI FR GB GR IE IT LI LU
MC NL PT SE
Etats d'extension désignés:
AL LT LV MK RO SI

(30) Priorité: 12.05.1998 FR 9805958

(71) Demandeur: COMMISSARIAT A L'ENERGIE
ATOMIQUE
75752 Paris Cédex 15 (FR)

(72) Inventeur: Baptist, Robert
38560 Jarrie (FR)

(74) Mandataire: Des Termes, Monique
Société Brevatome
3, rue du Docteur Lanceraux
75008 Paris (FR)

(54) **Système d'inscription d'informations sur un support sensible aux rayons X.**

(57) L'invention concerne un système d'inscription d'informations sur un support sensible aux rayons X. Le système comporte un ensemble de sources (22) de rayons X juxtaposées, et insérées dans une même enceinte à vide, et des moyens (34, 36, 38) de commande sélective des sources, pour impressionner ledit support sensible selon un motif sélectionné, tel qu'un code, des caractères ou une image, précédemment mémorisés dans un ordinateur.

Application à la radiologie

FIG. 1

## Description

Domaine technique

La présente invention concerne un système d'inscription d'informations sur un support sensible aux rayons X. L'invention trouve des applications notamment dans le domaine médical de la radiologie et de la tomographie pour ajouter sur des radiographies de patients, des informations telles que des données concernant le patient, des indications sur les conditions de réalisation de l'examen de radiologie ou des numéros d'identification des appareils de radiographie. Dans d'autres domaines d'application, tels que la spectrographie par diffraction de rayons X, la fluorescence, l'invention peut être mise à profit pour ajouter aux enregistrements des données concernant les échantillons traités par exemple.

Etat de la technique antérieure

L'archivage et l'analyse des supports de rayons X, et en particulier des films de radiologie, est grandement facilitée en accompagnant le film d'un certain nombre de données, telles que, par exemple le nom du patient. Ces données peuvent être consignées sur une étiquette collée sur le film, ou directement écrites sur le film au moyen d'encres spéciales développées avec le film. Des données très simples peuvent également être inscrites sur le film selon un codage de petites perforations pratiquées dans le film.

La manipulation d'étiquettes ou du film reste cependant une source d'erreurs humaines. Des étiquettes risquent d'être collées sur un film qui ne leur correspond pas et les écritures portées directement sur le film au moyen d'encres spéciales, risquent d'être illisibles en cas de surexposition de ce dernier.

Ainsi, pour éviter des erreurs d'analyse ou d'archivage, des techniques d'inscription d'informations, directement sur le film, ont été développées. Ces techniques sont exposées ci-dessous.

Les films radiographiques généralement utilisés dans le domaine médical sont des films sensibles à la lumière visible et sont enveloppés d'un matériau luminescent susceptible de convertir un rayonnement X en un rayonnement visible. Ce matériau permet de conférer ainsi au film une sensibilité aux rayons X afin d'enregistrer des images de radiographie des patients.

Pour faciliter sa manipulation, le film est mis en place dans une enveloppe opaque à la lumière visible, mais transparente aux rayons X.

On connaît un certain nombre de techniques pour ajouter sur le film sensible des informations d'identification du patient.

Selon une première technique, l'enveloppe du film est ouverte en salle inactinique (chambre noire) et le film est placé sous un appareil permettant d'impressionner le film non encore développé et y reporter les informations. Les informations sont reportées sur le film en éclairant une partie de ce film avec une lumière visible qui traverse une étiquette comprenant les informations à inscrire.

Une des difficultés principales lors de l'utilisation d'un tel appareil est de ne pas voiler la partie complémentaire du film devant recevoir ou ayant reçu l'enregistrement radiographique.

A cet effet, l'enveloppe du film peut être une cassette comportant un système de caches optiques amovibles. Ces caches peuvent être déplacés pour libérer une fenêtre permettant de n'éclairer, lors de report des informations, qu'une portion du film.

Selon une deuxième technique, l'information peut être reportée sur le film en l'exposant à un pinceau très fin de lumière d'un laser. Ce laser est déplacé parallèlement à la surface du film pour y inscrire des caractères ou des codes. Cette opération est également réalisée en chambre noire ou au moyen d'une cassette opaque spécialement adaptée.

Selon une variante, l'impression sur le film non développé peut aussi avoir lieu en y appliquant un écran d'affichage à cristaux liquides (LCD) éclairé ou un écran d'affichage fluorescent sous vide (VFD).

Dans toutes ces applications, on constate qu'il est important d'isoler soigneusement la partie du film recevant les informations de la partie du film recevant l'image radiographique. La lumière produite par les appareils d'inscription de l'information et surtout la lumière ambiante risquent en effet de "polluer" ou de voiler tout ou partie du film.

Selon une troisième technique, des éléments de transfert en forme de lettres et contenant un matériau absorbant des rayons X sont utilisés pour inscrire l'information sur le film. Les éléments de transfert sont déposés sur l'enveloppe du film (opaque à la lumière visible) et sont soumis à un rayonnement X. Ce rayonnement peut provenir du tube X servant à la radiographie du patient ou d'un autre tube X secondaire.

Dans ce cas également, les éléments de transfert sont utilisés avec un système de caches amovibles.

Le document EP-A-0 238 464 illustre encore d'autres procédés, selon des techniques voisines, pour le marquage des films sensibles aux rayons X.

L'ensemble des techniques exposées ci-dessus présentent des difficultés de mise en oeuvre liées en particulier à la nécessité d'isoler soigneusement la partie du film devant recevoir les informations.

En effet, des réflexions parasites de lumière visible ou infrarouge risquent de perturber l'image radiographique sur le film.

Par ailleurs, les procédés décrits ci-dessus ne sont adaptés qu'à la reproduction simple de caractères alphabétiques ou numériques mais ne permettent pas la restitution fine de différents niveaux de gris. Ces procédés ne conviennent donc pas pour reporter sur le film d'autres informations telles que des images ou des icônes personnalisés.

Exposé de l'invention

La présente invention a pour but de proposer un système d'inscription d'informations sur un support sensible, ne présentant pas les difficultés ou limitations mentionnées ci-dessus.

Un but de l'invention est en particulier de proposer un tel système permettant d'inscrire des informations sur un film, sans perturber l'image radiographique déjà enregistrée ou enregistrée ultérieurement sur le film.

Un but est encore de pouvoir inscrire directement sur le film des données préalablement saisies ou mémorisées dans un ordinateur.

Un autre but de l'invention est de permettre l'inscription d'images ou de logos représentés avec différents niveaux de gris.

Un but est enfin de prévoir un dispositif permettant de garantir un bon contraste des informations reportées sur le film.

Pour atteindre ces buts, l'invention a plus précisément pour objet un système d'inscription d'informations sur un support sensible aux rayons X, qui comporte un ensemble de sources de rayons X juxtaposées, et des moyens de commande sélectifs des sources, pour impressionner ledit support sensible selon un motif sélectionné.

Les sources sont commandées de façon concomitante ou séquentielle pour sélectivement provoquer ou non l'émission de rayons X par chacune des sources. L'intensité ou la dose de rayons X délivrée par chacune des sources peut également être modulée pour obtenir différents niveaux d'impression sur le support. Ces niveaux correspondent aux niveaux de gris dans le cas d'un film radiographique.

Selon une réalisation particulière du système, celui-ci peut comporter un réseau unidimensionnel ou bidimensionnel de sources ponctuelles de rayons X.

On entend par source ponctuelle une source émettant sur une surface très réduite assimilable à un point d'une image. Un réseau de sources ponctuelles permet ainsi de reproduire un texte ou une image par la juxtaposition de points ou éléments d'image appelés pixels.

Les sources de rayons X peuvent être réalisées, par exemple, sous forme de sources à micropointes. Ces sources permettent de former des matrices d'inscription miniaturisées présentant un nombre de sources élevé.

De telles matrices permettent de reproduire des images avec une bonne résolution et avec un nombre élevé de pixels.

De façon plus précise, chaque source de rayons X peut comporter au moins une source d'électrons à micropointes. Les sources d'électrons sont associées à une ou plusieurs anodes capables d'émettre des rayons X en réponse aux impacts des électrons.

Chaque source d'électrons peut être associée à une anode particulière. Cependant, un ensemble de sources peut également partager une anode commune.

Selon une première possibilité de polarisation des sources de rayons X, l'anode peut être reliée à un potentiel de masse et les moyens de commande peuvent comporter des interrupteurs associés aux sources d'électrons pour sélectivement relier les micropointes des sources d'électrons sélectionnées à un potentiel de haute tension négative, et/ou des alimentations prévues pour la génération de faisceaux d'électrons.

Selon ce mode de polarisation, les interrupteurs sont à un potentiel de haute tension.

Les moyens de commande peuvent comporter par ailleurs une unité de commande tel qu'un ordinateur pour piloter les interrupteurs et/ou des alimentations.

Pour éviter que l'ordinateur ne soit porté au même potentiel que les interrupteurs, et/ou les alimentations, ceux-ci peuvent être reliés à l'ordinateur par l'intermédiaire d'un dispositif d'isolation galvanique.

Selon une autre possibilité de polarisation, l'anode peut être reliée à un potentiel de haute tension positive et les interrupteurs des moyens de commande et/ou les alimentations peuvent être pilotés de façon à relier sélectivement les micropointes des sources sélectionnées à un potentiel de masse, et/ou à générer des faisceaux d'électrons plus ou moins intenses à partir de cathodes sélectionnées.

Selon un autre aspect avantageux de l'invention, le système peut comporter une enveloppe opaque à la lumière visible, apte à contenir le film de radiographie, et un cache, opaque aux rayons X, pouvant être adapté à la boîte pour recouvrir une région de l'enveloppe. Cette région correspond à une zone d'inscription d'informations du film.

Le cache opaque aux rayons X est maintenu sur l'enveloppe pendant que le support sensible, par exemple un film contenu dans l'enveloppe, est exposé aux rayons X d'un appareil de radiographie. Ainsi, les rayons X de la radiographie n'exposent pas la zone prévue pour l'inscription d'informations. Le cache peut ensuite être retiré de l'enveloppe pour impressionner le film dans ladite zone d'inscription d'informations, au moyen des sources de rayons X décrites ci-dessus. Un contraste amélioré de l'inscription est ainsi obtenu.

D'autres caractéristiques et avantages de la présente invention ressortiront mieux de la description qui va suivre, en référence aux figures des dessins annexés. Cette description est donnée à titre purement illustratif et non limitatif.

Brève description des figures

- La figure 1 est une coupe schématique partielle d'une réalisation particulière d'un système d'inscription d'informations conforme à l'invention.
- La figure 2 est une coupe schématique partielle d'une autre réalisation d'un système d'inscription d'informations conforme à l'invention. La réalisation de la figure 2 constitue une variante de celle de la figure 1.

- La figure 3 est une coupe schématique d'une enveloppe d'un système conforme à l'invention, apte à contenir un film sensible aux rayons X.

<u>Description détaillée de modes de mise en oeuvre de l'invention</u>

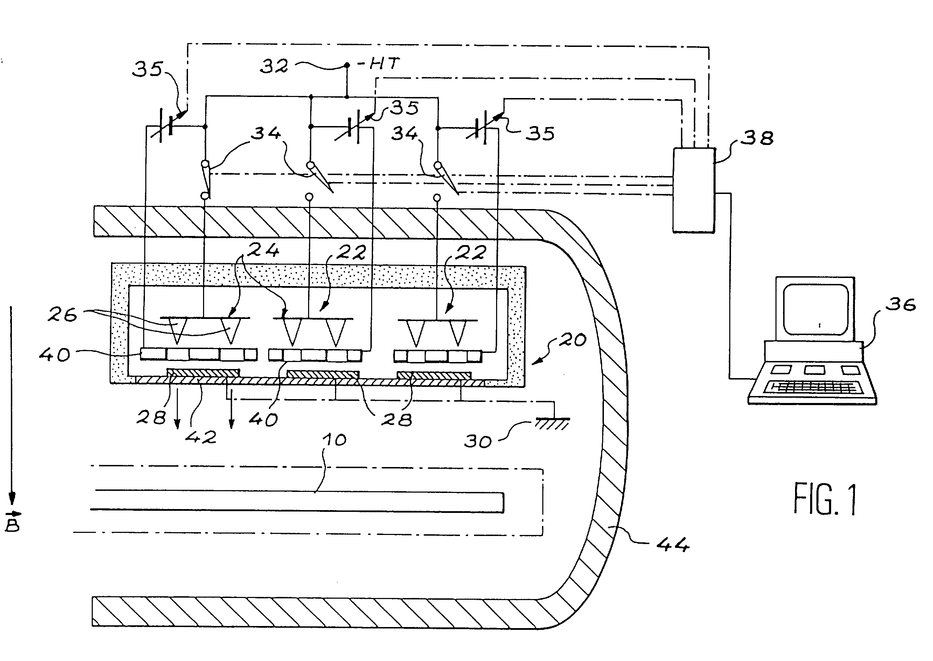

La figure 1 représente de façon très agrandie un dispositif pour l'inscription d'informations sur un support sensible aux rayons X tel qu'un film radiographique 10.

Le film 10 comporte une pellicule sensible aux rayonnement X et est recouvert d'un matériau convertisseur capable de transformer des rayons X reçus en une lumière visible susceptible d'impressionner la pellicule.

Le film 10, dont seule une partie est visible, peut être contenu dans une enveloppe de protection 50 qui, pour des raisons de simplification, est représentée de façon très schématique en trait mixte. Une telle enveloppe, de préférence opaque à la lumière visible et transparente aux rayons X, sera décrite plus en détail dans la suite du texte.

Le film 10 est mis en place sous un tube 20 de rayons X, sous vide, contenant une pluralité de sources de rayons X ponctuelles 22, agencées selon un réseau bidimensionnel. Les sources 22, miniaturisées, sont par exemple agencées en lignes et en colonnes de façon à former une matrice de sources ponctuelles.

Sur la figure 1, pour des raisons de simplification, le tube représenté ne fait apparaître que trois sources 22 agencées en ligne. Toutefois, un tel tube peut contenir un grand nombre de sources miniaturisées et juxtaposées pour former une matrice de sources, capable d'impressionner une surface sensible selon une image formée d'éléments d'image, ou pixels. Chaque source sert respectivement à fournir les rayons X pour l'impression d'un pixel correspondant.

Chaque source 22 de rayons X comporte une cathode à émission de champ 24 équipée d'une ou de plusieurs micropointes 26 et d'une anode 28.

Selon une variante, une anode commune peut être prévue pour une pluralité de sources ou pour l'ensemble des sources.

L'anode ou les anodes 28 sont reliées à un potentiel de référence (0 volts) qui est ici le potentiel de masse 30.

Les cathodes 24 peuvent être sélectivement reliées à une source de haute tension négative 32 par l'intermédiaire d'interrupteurs 34. Chaque cathode est équipée d'un interrupteur particulier 34, réalisé par exemple sous la forme d'un transistor, qui peut être piloté par des moyens de commande extérieurs formés par un ordinateur personnel 36.

Les interrupteurs sont reliés à l'ordinateur par l'intermédiaire de moyens d'isolation galvanique 38 comportant, par exemple des optocoupleurs. Les moyens d'isolation galvanique permettent d'isoler l'ordinateur de la haute tension négative de la source 32. En effet, la source de haute tension 32 délivre par exemple, une tension négative -HT de l'ordre de -10kV à -30kV.

On observe sur la figure 1 que le tube 20 de rayons X comporte également des grilles 40 disposées respectivement entre chaque cathode 24 et l'anode correspondante. Chaque grille est polarisée par rapport au potentiel de haute tension avec une tension positive fournie par une alimentation contrôlée 35 correspondante.

Une grille polarisée avec un potentiel positif Vg se trouve donc à un potentiel égal à -HT+Vg. Les valeurs de la tension de polarisation des grilles peuvent être des valeurs continues ou des valeurs discrètes prises dans une gamme déterminée pour obtenir sur le film une impression selon différents niveaux de gris. La gamme est comprise, par exemple entre 40 volts et 100 volts. On observe sur la figure 1 que les alimentations contrôlées 35 sont également pilotées par l'ordinateur 36 auquel elles sont reliées par l'intermédiaire des moyens d'isolation galvanique 38.

Selon une variante, l'adressage sélectif des sources de rayon X, peut être un adressage par lignes et par colonnes d'adressage. Dans ce cas, des lignes et des colonnes d'adressage, croisées, peuvent être respectivement associées aux cathodes et aux grilles des sources de rayons X. Des interrupteurs, disposés en tête des lignes et des colonnes, permettent d'appliquer sélectivement des tensions d'alimentation à des lignes et des colonnes, à l'intersection desquelles se trouvent des sources de rayon X devant être activées.

Selon une variante simplifiée, la commande des sources peut aussi être effectuée en agissant seulement sur les grilles correspondantes qui sont alors polarisée selon deux valeurs de Vg correspondant à un état d'émission (Vg=+100V) et un état d'extinction (Vg<40V) d'une source. Les interrupteurs 34 sont alors superflus.

Une grille supplémentaire peut être insérée entre les sources d'électrons et les anodes. Son rôle est alors d'éviter un retour d'ions sur les sources d'électrons provenant de l'anode lors du fonctionnement du tube de rayons X.

L'application de la haute tension à une cathode provoque l'émission d'électrons par les micropointes de la cathode. Sous l'effet du champ électrique existant entre la cathode et l'anode les électrons sont accélérés et viennent bombarder le matériau de l'anode.

Pour permettre un libre parcours important des électrons entre la cathode et l'anode, le tube 20 est mis sous vide. Le tube peut à cet effet comporter un élément de type getter (non représenté) pour maintenir une très basse pression intérieure.

Les anodes comportent, par exemple une fine couche de tungstène (W), ou éventuellement des matériaux légers tels que le magnésium ou l'aluminium, capable d'émettre des rayons X en réponse aux impacts des électrons.

Les anodes 28 sont disposées sur une fenêtre 42 en un matériau transparent aux rayons X, tel que, par exemple, du béryllium.

La dimension des anodes, et donc celle des sources de rayons X, est de l'ordre de 10µm dans le plan de la fenêtre 42 et leur épaisseur est de quelques micromètres.

Par ailleurs, les anodes et la fenêtre 42 sont séparées des cathodes d'une distance de l'ordre de quelques millimètres à un centimètre environ et sont portées, comme indiqué ci-dessus, à un potentiel de masse (0 volt).

Ainsi, des mesures particulières d'isolation électrique de la fenêtre 42 ne sont pas nécessaires.

La référence 44 désigne un aimant dans l'entrefer duquel sont disposés le tube 20 à rayons X et le film 10. L'aimant 44 crée un champ magnétique noté $\vec{B}$, perpendiculaire au plan des cathodes (i.e. perpendiculaire au plan du film), et assure que l'impact des électrons sur les anodes soit limité à une zone située face à la cathode émettrice des électrons. Le champ magnétique est choisi avec une amplitude suffisante (par exemple de $10^{-2}$ à $10^{-1}$ Tesla) pour éviter une dispersion des électrons de sorte que la zone de l'anode recevant les électrons et émettant des rayons X ne soit pas plus étendue que la cathode de la source correspondante.

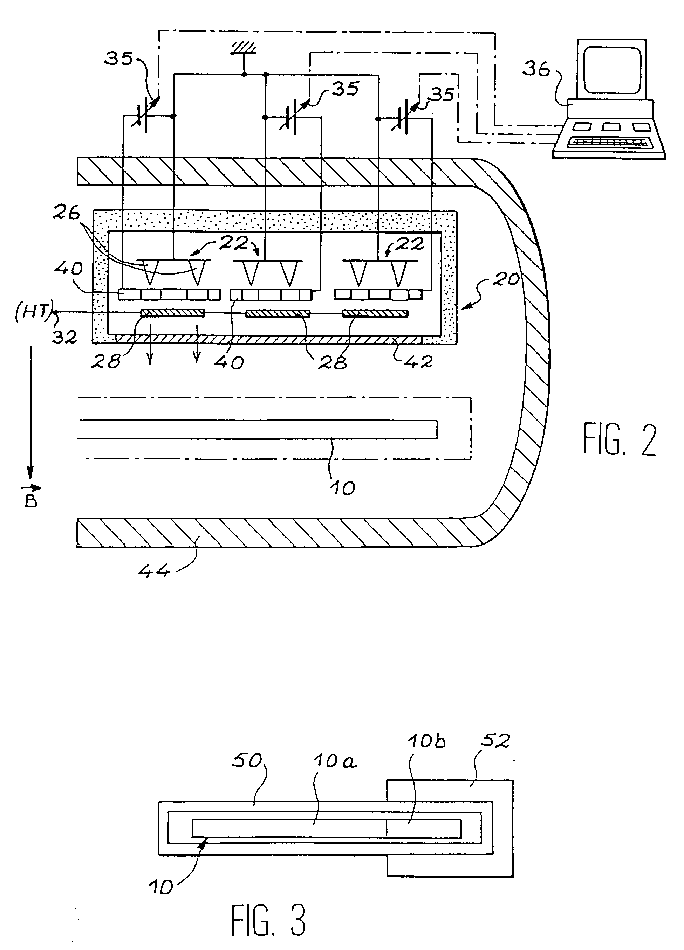

La figure 2 montre une réalisation d'un dispositif constituant une variante du dispositif de la figure 1. Pour des raisons de simplification, les parties de la figure 2 identiques, similaires ou équivalentes à celles de la figure 1 portent les mêmes références. Il est donc possible pour ces parties de se reporter à la description qui précède.

La différence essentielle entre le dispositif des figures 1 et 2 réside dans la polarisation des cathodes et des anodes.

Dans le dispositif de la figure 2, les anodes 28 sont reliées à un potentiel de haute tension positive 32. Les anodes 28 ne sont pas formées sur la fenêtre de sortie 42, comme dans la figure 1, mais en sont séparées et isolées électriquement pour éviter que la haute tension positive ne soit présente sur la fenêtre 42.

Dans cette réalisation, de même que dans la réalisation précédente, il est possible de remplacer l'ensemble des anodes individuelles 28 par une anode commune à toutes les sources de rayons X.

Pour générer des électrons, les grilles 40 sont polarisées positivement par rapport aux cathodes par des tensions Vg variables selon des valeurs discrètes ou continues. Ces tensions sont délivrées par des alimentations contrôlées 35.

Si une tension Vg est inférieure à un certain seuil, l'émission de la cathode correspondante est nulle. Ceci permet de façon équivalente à l'ouverture ou la fermeture d'un interrupteur, de faire fonctionner ou non une cathode (en tout ou rien).

Si Vg est supérieur à ce seuil, l'émission de la cathode, plus ou moins intense (selon la valeur de Vg), conduit à une émission de rayons X plus ou moins intense et par là, à une insolation plus ou moins prononcée du film.

De façon avantageuse, selon ce mode de réalisation, les alimentations contrôlées 35 ne sont pas portées à un potentiel élevé. Elles peuvent par conséquent être reliées directement à l'ordinateur 36, qui fonctionne à basse tension, sans prévoir de moyens d'isolation galvanique particuliers.

Comme pour la première réalisation décrite précédemment, les sources peuvent être adressées simultanément ou successivement source après source, ligne après ligne ou colonne après colonne pour reproduire sur le film une image, point par point (pixel par pixel). Les données de l'image ou des informations à inscrire peuvent être stockées dans une mémoire de l'ordinateur.

Le temps d'insolation, c'est-à-dire le temps de l'émission de rayons X par chaque source peut être ajusté en fonction de la transparence du film de béryllium qui forme la fenêtre 42 du tube de rayons X et en fonction de la sensibilité du film utilisé.

En particulier le temps d'insolation peut être ajusté selon que le film sensible est équipé ou non d'une couche de matériau intensificateur de lumière.

La figure 3 montre une réalisation particulière d'une enveloppe permettant une manipulation aisée du support sensible et permettant d'inscrire les informations avec un excellent contraste. L'utilisation d'une telle enveloppe est particulièrement adaptée pour des applications de l'invention à la radiologie.

L'enveloppe est formée par une boîte 50 en un matériau opaque à la lumière visible et transparent aux rayons X, tel que par exemple une feuille de carbone.

L'enveloppe contient un support sensible qui dans le cas de la figure 3 est un film radiographique 10. Le film comporte une première zone 10a destinée à l'enregistrement d'une image de radiographie et une seconde zone 10b d'inscription d'informations contenues dans le fichier de l'ordinateur.

On observe que le boîtier est équipé d'un cache amovible 52, opaque aux rayons X, qui peut être mis en place sur la boîte 50, pour en recouvrir une région correspondant à la seconde zone 10b du film. Dans l'exemple illustré, le cache 52 réalisé en plomb, peut être emboîté latéralement sur la boîte 50.

L'enveloppe formée de la boîte 50 et éventuellement du cache 52 permet de manipuler le film en toute sécurité sans risquer de l'exposer à la lumière visible.

Par ailleurs, le film, avec l'enveloppe, peut être mis en place dans un appareil de radiographie usuel pour former sur la première zone 10a du film une image radiographique. Lors de l'exposition du film aux rayons X pour la formation de l'image de radiographie la partie 10b est protégée par le cache et ne risque pas d'être impressionnée.

Lors de l'inscription des informations sur le film, qui peut avoir lieu avant ou après la radiographie, le cache 52 est éliminé. Un tube de rayons X bidimensionnel, tel que décrit précédemment est alors appliqué contre le boîtier 50, dans la région correspondant à la zone 10b du film.

Comme cette zone de film est protégée lors de la formation de l'image radiographique, l'inscription des informations peut être obtenue avec un contraste amélioré.

Comme évoqué précédemment, le système de l'invention permet de reporter dans la zone 10b du film des informations telles que des caractères alphabétiques ou numériques, des codes-barres, des icônes ou logos, ou encore des images, précédemment mémorisés.

## Revendications

1. Système d'inscription d'informations sur un support sensible aux rayons X, caractérisé en ce qu'il comporte un ensemble de sources (22) de rayons X juxtaposées, et des moyens (34, 35, 36, 38) de commande sélective des sources, pour impressionner ledit support sensible selon un motif sélectionné.

2. Système selon la revendication 1, comprenant un réseau unidimensionnel ou bidimensionnel de sources ponctuelles (22) de rayons X.

3. Système selon la revendication 2, dans lequel les sources (22) de rayons X sont des sources à micropointes (26).

4. Système selon la revendication 3, dans lequel chaque source (22) de rayons X comporte au moins une source d'électrons (24) à micropointes (26), les sources d'électrons étant associées à au moins une anode (28), apte à émettre des rayons X en réponse à des impacts d'électrons fournis par les sources d'électrons.

5. Système selon la revendication 4, dans lequel ladite anode (28) est reliée à un potentiel de haute tension positive et dans lequel les moyens de commande comportent des interrupteurs (34) associés aux sources d'électrons, pour sélectivement connecter les micropointes (26) de sources d'électrons sélectionnées à un potentiel de masse.

6. Système selon la revendication 4, dans lequel ladite anode est reliée à un potentiel de masse et dans lequel les moyens de commande comportent des interrupteurs associés aux sources d'électrons pour sélectivement connecter les micropointes de sources d'électrons sélectionnées à un potentiel de haute tension négative.

7. Système selon l'une des revendications 4 à 6, dans lequel les moyens de commande comportent des grilles d'extraction (40) associées respectivement aux sources d'électrons, et des alimentations contrôlées (35) pour sélectivement polariser les grilles d'extraction (40) par rapport aux micropointes des sources d'électrons correspondantes.

8. Système selon l'une des revendications 5 à 7, dans lequel les moyens de commande comportent un ordinateur (36) relié aux interrupteurs (34) et/ou aux alimentations (35).

9. Système selon la revendication 8, dans lequel l'ordinateur (36) est relié aux interrupteurs et/ou aux alimentations (35) par l'intermédiaire d'un dispositif (38) d'isolation galvanique.

10. Système selon la revendication 1, dans lequel le support sensible (10) est un film radiologique.

11. Système selon la revendication 10, comportant en outre une enveloppe (50) opaque à la lumière visible, apte à contenir le film radiologique, et un cache (52) opaque aux rayons X pouvant être adapté à l'enveloppe pour recouvrir une région de l'enveloppe correspondant à une zone d'inscription d'informations d'un film pendant une exposition radiographique du film, et pouvant être retiré de l'enveloppe pour impressionner le film dans ladite zone d'inscription d'informations.

12. Utilisation d'un réseau bidimensionnel de sources (22) de rayons X juxtaposées, pouvant être commandées sélectivement, pour l'inscription d'informations sur un support (10) sensible aux rayons X.

FIG.1

FIG. 2

FIG. 3

Office européen  **RAPPORT DE RECHERCHE EUROPEENNE**  Numéro de la demande

des brevets  EP 99 40 1126

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,X<br><br>A | US 4 860 330 A (STROEMMER PEKKA ET AL) 22 août 1989 (1989-08-22)<br>* revendication 1; figure 1 *<br>--- | 1,2,<br>10-12<br>8 | G03B42/04 |
| A | US 3 845 314 A (MAST F ET AL) 29 octobre 1974 (1974-10-29)<br>* abrégé; figure 1 *<br>--- | 1,12 | |
| A | PATENT ABSTRACTS OF JAPAN vol. 007, no. 127 (P-201), 3 juin 1983 (1983-06-03) & JP 58 043448 A (TOKYO SHIBAURA DENKI KK), 14 mars 1983 (1983-03-14)<br>* abrégé *<br>----- | 1,12 | |

**DOMAINES TECHNIQUES RECHERCHES** (Int.Cl.6)

G03B

Le présent rapport a été établi pour toutes les revendications

| Lieu de la recherche | Date d'achèvement de la recherche | Examinateur |
|---|---|---|
| LA HAYE | 2 septembre 1999 | Romeo, V |

**ANNEXE AU RAPPORT DE RECHERCHE EUROPEENNE
RELATIF A LA DEMANDE DE BREVET EUROPEEN NO.**

EP 99 40 1126

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-09-1999

| Document brevet cité au rapport de recherche | Date de publication | Membre(s) de la famille de brevet(s) | | Date de publication |
|---|---|---|---|---|
| US 4860330 A | 22-08-1989 | FI | 861212 A | 22-09-1987 |
| | | AT | 64217 T | 15-06-1991 |
| | | EP | 0238464 A | 23-09-1987 |
| | | JP | 1950574 C | 10-07-1995 |
| | | JP | 6079134 B | 05-10-1994 |
| | | JP | 62227139 A | 06-10-1987 |
| US 3845314 A | 29-10-1974 | DE | 2063080 A | 02-09-1971 |
| | | FR | 2080358 A | 12-11-1971 |
| | | GB | 1307940 A | 21-02-1973 |
| | | JP | 54014479 B | 07-06-1979 |
| | | NL | 7018721 A,B | 27-08-1971 |
| | | SE | 372350 B | 16-12-1974 |
| | | US | 3631243 A | 28-12-1971 |
| JP 58043448 A | 14-03-1983 | AUCUN | | |

EPO FORM P0460

Pour tout renseignement concernant cette annexe : voir Journal Officiel de l'Office européen des brevets, No.12/82